**Europäisches Patentamt**

**European Patent Office**

**Office européen des brevets**

(11) Veröffentlichungsnummer: **0 439 155 A1**

# (12) EUROPÄISCHE PATENTANMELDUNG

(21) Anmeldenummer: **91100850.6**

(22) Anmeldetag: **23.01.91**

(51) Int. Cl.5: **B60R 9/10**

(30) Priorität: **24.01.90 DE 4002023**
**31.10.90 DE 4034704**

(43) Veröffentlichungstag der Anmeldung:
**31.07.91 Patentblatt 91/31**

(84) Benannte Vertragsstaaten:
**AT BE CH DE FR GB IT LI LU NL SE**

(71) Anmelder: **Feicht, Josef**
**Ringstrasse 7**
**W-8060 Dachau(DE)**

(72) Erfinder: **Feicht, Josef**
**Ringstrasse 7**
**W-8060 Dachau(DE)**

(74) Vertreter: **Klunker . Schmitt-Nilson . Hirsch**
**Winzererstrasse 106**
**W-8000 München 40(DE)**

(54) **Schutzabdeckung für Zweiräder.**

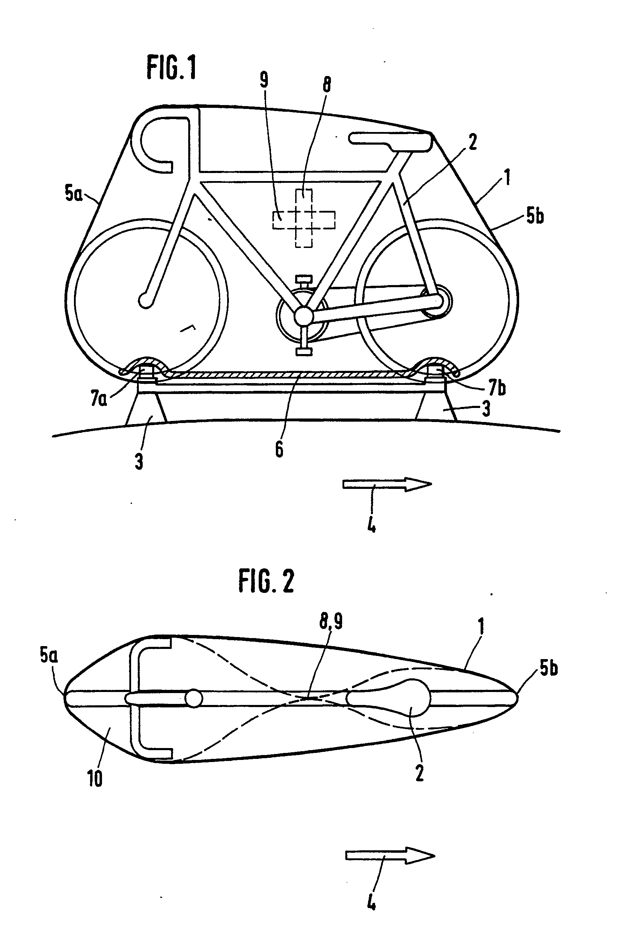

(57) Die Erfindung betrifft eine Schutzabdeckung (1) für Zweiräder (2) oder dergleichen für den Transport auf Kraftfahrzeugen. Sie besteht aus widerstandsfähiger Kunststoffolie, die allseits spritzwasserdicht verschlossen ist und mindestens auf einer Seite einen lösbaren, ebenfalls spritzwasserundurchlässigen Verschluß (6) aufweist. Die Grundform der Schutzhülle (1) ist aerodynamisch angepaßt und mit zusätzlichen Stabilisierungselementen ausgestattet (Fig.1). Die Schutzhülle (1) weist in einer bevorzugten Ausführungsform verschließbare Öffnungsschlitze auf, die den direkten Zugriff zum Rahmen des Zweirades (2) ermöglichen, wodurch einerseits das Handhaben des umhüllten Zweirades (2) und andererseits das Befestigen an sogenannten Heckgepäckträgern (3) erleichtert wird.

FIG.1

EP 0 439 155 A1

## SCHUTZABDECKUNG FÜR ZWEIRÄDER

Die Erfindung betrifft eine Schutzabdeckung für Zweiräder, insbesondere für den Transport auf Kraftfahrzeugen.

Als Schutzabdeckung für Zweiräder, wie z. B. Motorräder, Fahrräder oder dgl., werden üblicherweise Abdeckplanen oder sogenannte Pelerinen verwendet. Derartige Schutzabdeckungen werden über das Fahrzeug gestülpt und gegebenenfalls an diesem mit Hilfe von Seilen, Ketten oder dgl. befestigt. Auf diese Weise können im Freien abgestellte Fahrzeuge vor Schnee und Regen sowie vor Verschmutzung und leichteren Beschädigungen geschützt werden. Weist die Abdeckplane oder Pelerine im Randbereich Befestigungsösen auf, ist ein Verzurren der Schutzabdeckung und gegebenenfalls das Anbringen eines Schlosses möglich, wodurch auch die zufällige oder mutwillige Entfernung der Schutzabdeckung erschwert wird.

Nachteilig an derartigen Schutzabdeckungen ist, daß sie zum Teil sehr umständlich am Fahrzeug zu befestigen sind, nur am abgestellten bzw. ruhenden Fahrzeug sinnvoll verwendbar sind und nur von oben kommende Verschmutzung oder Nässe abhalten. Gegen vom unteren Bereich der Abdeckplanen einwirkende Verschmutzungen, Nässe oder Windbelastungen sind derartige Schutzabdeckungen nur begrenzt wirksam.

Wegen der genannten Nachteile werden Zweiräder beim Transport auf dem Autodach üblicherweise auf dem Dachständer des Kraftfahrzeugs befestigt ungeschützt transportiert. Die Abdeckung mit üblichen Abdeckplanen oder Pelerinen führt infolge der Einwirkung des Fahrwindes, der auch vom unteren Bereich der Abdeckung auf diese einwirkt, trotz Abdeckung zur Durchnässung und Verschmutzung des Zweirads. Darüber hinaus führt die Windbelastung üblicherweise sehr schnell zur Zerstörung der Abdeckung.

Sollen diese Nachteile vermieden werden, ist eine umständliche und aufwendige Verschnürung der Abdeckplane notwendig, die nur beim Transport des Zweirades über größere Entfernungen sinnvoll oder akzeptabel ist.

Je vollständiger das Zweirad von der Schutzabdeckung umhüllt wird, um so problematischer wird jedoch die Handhabung des verpackten Zweirades, da das Zweirad wegen der Umhüllung nur noch schwer zu fassen ist. Das Hochheben des verpackten Zweirades auf Gepäckträger oder Dachständer sowie das vom PKW Herunternehmen, ist deshalb umständlich und mühsam. In gleicher Weise ist die Befestigung derart verpackter Zweiräder immer dann problematisch, wenn für die Halterungselemente ein direkter Zugriff zum Rahmen des Zweirades notwendig ist.

Aufgabe der Erfindung ist es deshalb, eine Schutzabdeckung vorzuschlagen, die einfach und schnell am Zweirad zu befestigen ist und die auch unter Einwirkung des Fahrtwindes einen sicheren Schutz vor Nässe oder Verschmutzung des Zweirades darstellt.

Diese Aufgabe wird erfindungsgemäß dadurch gelöst, daß die Schutzabdeckung allseits spritzwasserdicht verschlossen ist und auf mindestens einer Seite einen lösbaren Verschluß aufweist, der im geschlossenen Zustand ebenfalls spritzwasserundurchlässig ausgeführt ist.

Gemäß einer Weiterbildung der Erfindung ist der Verschluß als Klettverschluß oder als Reißverschluß ausgeführt. In einer bevorzugten Ausführungsform weist die Schutzhülle eine aerodynamische Grundform auf, die mit Stabilisierungselementen verstärkt ist.

Besonders vorteilhaft ist es dabei, daß die erfindungsgemäße Schutzhülle neben den üblichen Anwendungen, d. h. bei abgestellten oder eingelagerten Zweirädern, auch den Transport von Zweirädern bei schlechten Witterungsverhältnissen auf dem Autodach, an Wohnanhängern oder Wohnmobilen ermöglicht. Durch den allseitigen Verschluß der Hülle wird das Eindringen von Spritzwasser, wie es beispielsweise beim Transport im Regen auftritt, nahezu vollständig verhindert. Die wasserempfindlichen Teile, wie z. B. Tretlager, Gangschaltung oder Sattel, sind vor Wasser- und Schmutzeinwirkung geschützt. Ebenso wird ein Verschmutzen des Autodaches durch vom Fahrrad tropfendes Öl oder Schmutz vermieden. Die aerodynamische Grundform stellt einen minimalen Fahrtwindwiderstand sicher, durch den die Windbelastung während des Transports vertretbar gering ist. Durch die zusätzlich vorgesehenen Stabilisierungselemente wird ein Flattern oder Aufblähen der Schutzhülle verhindert und damit ein vorzeitiges Zerstören vermieden. Durch die an die Grundform des Zweirades angepaßte Form der Schutzhülle ist das Abdecken durch einfaches Überstülpen über das Zweirad extrem einfach. Mit Hilfe des lösbaren Verschlusses ist das wasserdichte Verpacken des Zweirades auch für eine Einzelperson mit wenigen Handgriffen möglich. Das Auspacken des Zweirades geht in umgekehrter Reihenfolge ebenso einfach und schnell vonstatten. Ein umständliches Verschnüren der Schutzhülle entfällt vollständig, so daß sich die Anwendung auch für kurze Transportwege anbietet.

Um das Hochheben des verpackten Zweirades zu erleichtern, sind in der Fläche der Schutzabdeckung, zumindest auf einer Seite derselben, mindestens zwei weitere verschließbare Öffnungsschlitze vorgesehen, die sich mit den Rahmenrohren des umhüllten Zweirades kreuzen oder in etwa parallel dazu verlaufen und die einen direkten Zugriff zum Rahmen des Zweirades ermöglichen.

In einer zusätzlichen Weiterbildung der Erfindung sind die Öffnungsschlitze auf beiden Seiten der Schutzhülle vorgesehen. Durch diese Maßnahme ist einerseits ein beidseitiger Zugriff zum Zweirad möglich; darüber hinaus ist aber auch durch diese Öffnungen hindurch eine direkte Befestigung am Rahmen des Zweirades mittels Halterungen des Gepäckträgers oder auch ein Durchdringen der Schutzhülle durch Halterungselemente zur Befestigung weiterer, parallel angeordneter Zweiräder möglich.

Ein Verschließen der Öffnungsschlitze wird durch Klettverschlüsse oder mehrläufige Reißverschlüsse ermöglicht. Dadurch ist das Verschließen der Öffnungsschlitze unter Berücksichtigung der individuellen Halterungspositionen in einfacher Weise möglich.

Das Vorsehen von beidseitig bedienbaren Reißverschlüssen ermöglicht den Zugang zu allen Reißverschlüssen sowie das Öffnen und Schließen von einer Seite des Zweirades aus, wodurch auch die Befestigung des verpackten Zweirades an sogenannten Heckgepäckträgern erleichtert wird.

Weiter Ausführungsformen und Vorteile sind den nachfolgenden Beispielen und der Figur zu entnehmen.

Fig. 1
eine schematisierte Darstellung der Schutzhülle, die über ein Fahrrad gestülpt ist, in der Seitenansicht,

Fig. 2
eine über ein Fahrrad gestülpte Schutzhülle in der Draufsicht,

Fig. 3 - 11
die Seitenansichten verschiedener weiterer Ausführungsformen der Schutzhülle,

Fig. 12 und 13
Schutzhüllen mit erfindungsgemäßen verschließbaren Öffnungsschlitzen,

Fig. 14 und 15
einen handelsüblichen Heckgepäckträger zum Transport von Zweirädern,

Fig. 16 und 17
den schematischen Aufriß zweier Schutzhüllen.

In Fig. 1 ist eine Ausführungsform der erfindungsgemäßen Schutzhülle 1 schematisiert dargestellt. Dem besseren Verständis wegen wurde die Darstellung auf die wesentlichsten Funktionselemente beschränkt.

Gemäß der Darstellung in Fig. 1 ist die Schutzhülle 1 über ein Fahrrad 2 gestülpt, welches auf einem Autodachständer 3 befestigt ist. Das Fahrrad ist auf dem Dachständer mit dem Hinterrad in Fahrtrichtung 4 weisend angeordnet.

Die Schutzhülle 1 ist vollständig über das Fahrrad 2 gestülpt. In den senkrechten Bereichen 5a, b ist die Schutzhülle wasserfest vernäht und/oder verklebt. Im unteren Bereich weist die Hülle über die gesamte Länge einen lösbaren Verschluß 6 auf, der vorzugsweise als Klettbandverschluß ausgeführt das vollständige Verschließen der Schutzhülle ermöglicht. In den Bereichen 7a, b, an denen das Fahrrad am Dachständer 3 des Kraftfahrzeuges befestigt ist, wird der Klettverschluß sehr stramm an den Befestigungsmitteln des Dachständers vorbeigeführt, so daß auch hier ein ausreichender Verschluß der Hülle sichergestellt und damit ein Eindringen von Schmutz oder Feuchtigkeit vermieden wird.

Im inneren Bereich des Fahrradrahmens sind zu beiden Seiten der Schutzabdeckung auf der Innenseite der Abdeckung Klettbandstreifen 8, 9 vorgesehen, die ein Aneinanderhaften der beiden Seitenflächen der Schutzhülle im Mittelbereich ermöglicht, wodurch sich eine besonders günstige und stabile aerodynamische Grundform ergibt. Außerdem ist durch dieses mittige Fixieren der beiden Seitenteile ein Flattern oder Aufblähen der Plane besonders wirkungsvoll verhindert, da sich die beiden Seiten der Schutzhülle gegenseitig stützen und einer Aufbläh- oder Flatterbewegung der Fläche stets entgegenwirken. Sind die Klettbandstreifen 8, 9, wie in Fig. 1 dargestellt, kreuzförmig angeordnet, wobei ein Streifen des Klettbandpaares auf der einen Seite senkrecht und der zweite auf der anderen Schutzhüllenseite waagrecht auf der Innenseite der Schutzhülle befestigt ist, ist innerhalb eines großen Toleranzbereiches das Verkletten der beiden Schutzhüllenseiten ohne Zusatzmaßnahmen gewährleistet. Bei einer derartigen kreuzweisen Anordnung der Klettbandpaare reicht es aus, wenn die beiden Folienseiten einfach im Mittelbereich kurz aneinandergedrückt werden. Die Positionierung der Klettbandstreifen zueinander ist somit beim Verschließen zwangsläufig gegeben. Das Lösen dieser Verklettung wird durch auf beiden Außenseiten der Schutzhülle vorgesehene Zugösen erleichtert. Die Zugösen sind dafür über den Klettbandstreifen so angeordnet, daß durch Auseinanderziehen ein einfaches Trennen der mittigen Klettverbindung gewährleistet ist. In einfachsten Fall geschieht dies durch Vorsehen von Mehrfachschlaufen, die genau über den Klettbändern, längs zu diesen verlaufend, angeordnet sind.

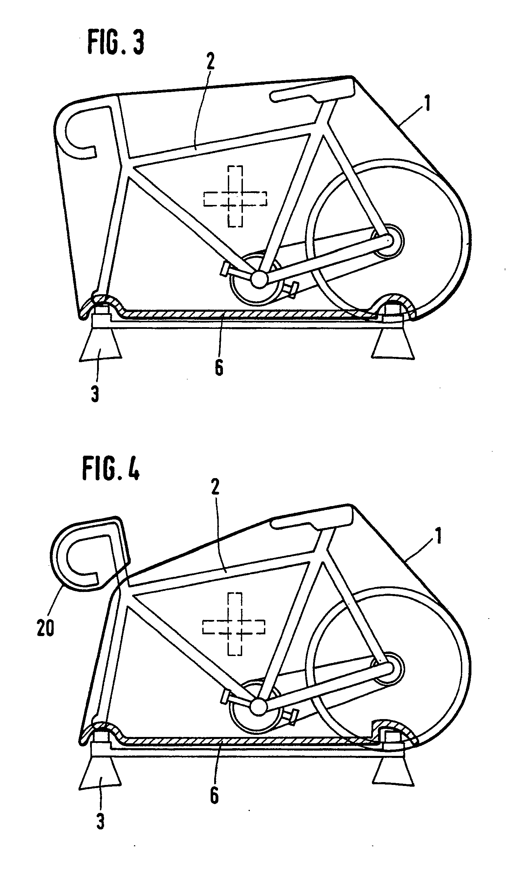

Fig. 2 zeigt die in Fig. 1 dargestellt Schutzabdeckung in Draufsicht. In dieser Darstellung ist die aerodynamische Grundform der Schutzabdeckung besonders gut erkennbar. Das in Fahrtrichtung 4 weisende Hinterrad des Fahrrads wird von der Schutzabdeckung 1 relativ enganliegend umhüllt. Im Bereich des Klettbandkreuzes 8, 9 berühren sich die Flächen der Schutzabdeckung, wodurch sich eine Einschnürung der Schutzabdeckung ergibt. In dem in Fahrtrichtung gesehenen hinteren Bereich ergibt sich eine tropfenförmige Aufweitung 10 der Schutzhülle, da in diesem Bereich der Lenker des Fahrrads angeordnet ist. Diese tropfenförmige Erweiterung 10 könnte durch Querstellen des Fahrradlenkers zwar etwas reduziert werden, durch derartige Maßnahmen wird das Verstauen und das anschließende Wiederfahrbereitmachen des Fahrrades aber zusätzlich behindert. Es hat sich außerdem gezeigt, daß die im Fahrradlenkerbereich sich ergebende Verbreiterung der Schutzhülle auf das aerodynamische Verhalten des Gesamtaufbaus keine besonders negative Auswirkung hat.

In Fig. 3 ist eine weitere Ausführungsform der Schutzabdeckung dargestellt. Bei dieser Variante wird ein Fahrrad umhüllt, das ohne Vorderrad auf dem Dachständer des Kraftfahrzeuges befestigt ist. Diese Art der Fahrradbefestigung auf dem Dachständer findet sehr häufig Anwendung, da sich dabei einerseits eine höhere Stabilität der Gesamtanordnung ergibt und ein Verziehen (Achterbildung) des Vorderrades vermieden wird.

Bei der in Fig. 4 gezeigten weiteren Ausführungsform der erfindungsgemäßen Schutzabdeckung ist eine weitere Minimierung der Gesamtfläche der Schutzhülle erreicht. Da bei dieser Ausführungsform der Fahrradlenker außerhalb der Hauptschutzhülle angeordnet und, wie bei der in Fig. 3 bereits erwähnten Variante, das Fahrrad ohne Vorderrad auf dem Dachständer befestigt ist, entfällt die Ausbuchtung der Schutzhülle im Bereich des Fahrradlenkers. Die beiden Hauptflächen der Hülle verlaufen über die Gesamtlänge nahezu parallel. Auf diese Weise ist das Fahrrad zwar nicht mehr vollständig geschützt, man erreicht damit aber eine weitere Reduzierung des minimalen Luftwiderstandes. Bei dieser Ausführungsform ist auch die Anfälligkeit gegen Seitenwindbelastung gegenüber der in Fig. 1 gezeigten Ausführungsform wesentlich geringer.

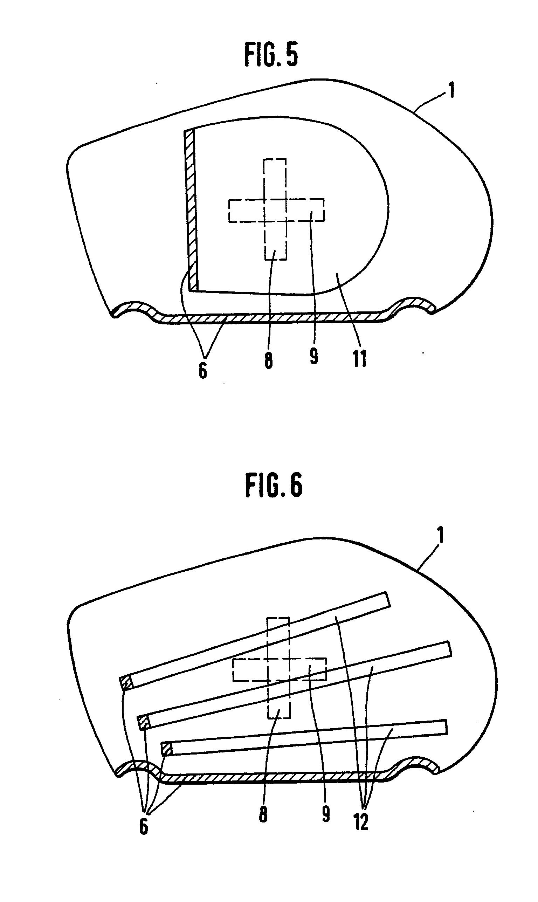

Fig. 5 zeigt eine Weiterbildung der Erfindung, bei der im mittigen Bereich der Schutzhülle eine Tasche 11 aufgenäht ist, die in dem in Fahrtrichtung 4 rückwärtigen Bereich ebenfalls einen lösbaren Verschluß aufweist. Die Tasche 11 ist so ausgebildet, daß das Vorderrad des Fahrrades darin untergebracht werden kann. Durch die Anordnung der Tasche 11 wird nicht nur zusätzlicher Stauraum geschaffen, der das vom Fahrrad abmontierte Vorderrad aufnimmt, das in der Tasche untergebrachte Vorderrad stabilisiert zusätzlich auch die Gesamtfläche der Schutzhülle. Sinnvollerweise wird auch bei dieser Ausführungsform im Mittenbereich das bereits erwähnte Klettbandkreuz 8, 9 vorgesehen. Auf diese Weise wird auch die gegenüberliegende Schutzhüllenseite durch das in der Tasche 11 verstaute Vorderrad mitversteift. Gleichermaßen ist es möglich, auf beiden Seiten der Schutzhülle jeweils eine, vorzugsweise zueinander versetzte Radtasche 11 vorzusehen, so daß neben dem zum Fahrrad gehörenden Vorderrad auch ein Reserverad verstaut werden kann. Das Zueinanderversetzen der Taschen ist empfehlenswert, da sich dann die Naben der beiden Räder nicht gegenseitig behindern.

Fig. 6 zeigt eine Schutzhülle 1 mit auf beiden Seiten aufgebrachten länglichen Stabilisierungselementen 12. Sie bestehen aus auf der Schutzhüllenaußenseite aufgebrachten Folientaschen, in denen sogenannte Stabilisierungslatten eingeschoben sind. Am Ende der Taschen 12 sind ebenfalls Klettbandverschlüsse vorgesehen, die ein sicheres Schließen der Taschen, gleichermaßen aber auch ein leichtes Entfernen der Stabilisierungslatten ermöglicht. Mit Hilfe des Klettbandkreuzes 8, 9 ist auch bei dieser Ausführungsform eine weitere Stabilisierung beider Gesamtflächen erreicht.

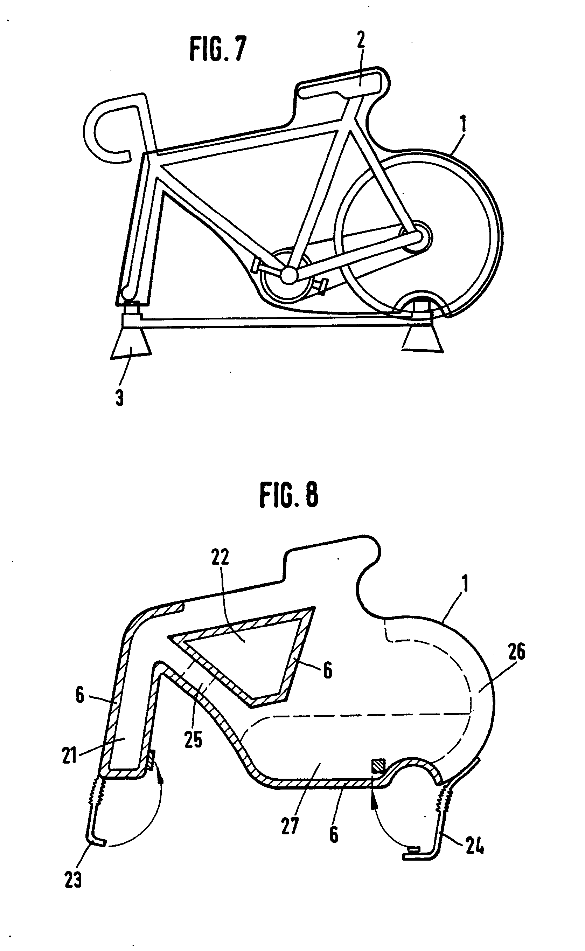

In den Fig. 7, 8 ist eine weitere Variante der Schutzhülle 1 dargestellt. Diese Schutzhülle ist von der Herstellung her betrachtet zwar am aufwendigsten, bei ihr sind die Luftwiderstandswerte, insbesondere die bezüglich Seitenwindbelastung, aber besonders günstig.

Fig. 7 zeigt, wie ein Fahrrad von der Schutzabdeckung umhüllt wird. In Fig. 8 ist die Hülle allein wiedergegeben.

Die in den Fig. 7, 8 dargestellte Hülle unterscheidet sich von dem vorhergehend Beschriebenen durch konsequente Reduzierung der Schutzplanenfläche durch extreme Anpassung der Schutzhüllenform an die des Zweirads. Die Vorderradgabel wird dabei in einen Schutzhüllenschlauch 21 verstaut, der relativ enganliegend die Form dieses Bereichs des Fahrrads nachempfindet. Im Innenbereich des Fahrradrahmens ist eine Aussparung 22 vorgesehen, die die Gesamtfläche durchbricht und mit der insbesondere die Angriffsfläche für Seitenwind erheblich reduziert wird. Darüber hinaus ist die Umrißform soweit möglich noch stärker an die Umrißform des Zweirads angepaßt.

Wie an den Klettbandverschlüssen 6 erkennbar, ist die Schutzhülle im gesamten mittleren Bereich, zu beiden Seiten des schlauchförmigen Teils 21 sowie im Bereich der Aussparung 22 mit lösbaren Verschlüssen ausgestattet. Die Schutzhülle ist somit hälftig aufklappbar. In dieser geöffneten Form wird es über Hinterrad, Sattel und Rahmen gestülpt. Anschließend werden die Verschlüsse der Reihe nach geschlossen. Beim Schließen ist darauf zu achten, daß die Hülle 1 am Fahrrad gut anliegt und in der Endform möglichst faltenfrei sitzt. Nachdem alle Verschlüsse, auch die im Aussparungsbereich 22, geschlossen sind, kann die Hülle vorzugsweise zuerst mit dem Riemen 23 und dann mit dem Riemen 24 am Dachständer verspannt werden. Das Verspannen erfolgt durch Umschlingen des Dachständer-Holmes mit den Riemen 23, 24 und anschließendes Fixieren der ebenfalls mit Klettbändern ausgestatteten Enden an den an der Schutzhülle angeordneten Klettbandgegenstücken. Durch das abschließende Abspannen der Schutzhülle ist ein Verschieben der Hülle im Fahrtwind besonders einfach und doch wirkungsvoll verhindert. Derartige Maßnahmen sind selbstverständlich auch bei den vorhergehenden Schutzhüllen verwendbar. In einer bevorzugten Ausführungsform sind die Riemen 23, 24 zumindest innerhalb gewisser Grenzen elastisch ausgeführt, wodurch auch ein Lockern der Verspannung unterbunden ist.

Durch das Verspannen der Schutzhülle 1 am Zweirad bzw. dem Auto-Dachständer und durch die enganliegende Form ist die Scheuerbelastung im Bereich des Hinterrades sowie im Bereich der Antriebskette bzw. der Tretlager-Zahnräder wesentlich erhöht. Diesem Problem kann durch spezielle Verstärkungselemente 26, 27 begegnet werden. Sind diese Verstärkungselemente als Ledereinsätze ausgeführt, so ist neben einer hohen Lebensdauer auch sichergestellt, daß Verschmutzungen nicht die Hülle durchdringen und von außen betrachtet den optischen Gesamteindruck der Hülle beeinträchtigen.

Verschiedene Fahrraddachständer stützen das Fahrrad vom Dachständer aus zum Fahrradrahmen mittels Stützstreben oder dgl. zusätzlich ab. Ergänzt man die Schutzhülle z. B. im Bereich 25 mit einem weiteren Verstärkungselement, so kann die Stützstrebe auch bei geschlossener Hülle am Fahrradrahmen befestigt werden, ohne daß eine Beschädigung der Hülle zu erwarten ist.

Dem Fachmann ist klar, daß die in den verschiedenen Ausführungsvarianten genannten Details auch untereinander kombiniert oder ausgetauscht werden können, ohne daß dadurch der Grundgedanke der Erfindung verlassen wird. Ebenso sind Modifikationen möglich, die der Anpassung der erfindungsgemäßen Grundidee an spezielle Eigenarten von Zweirädern dienen.

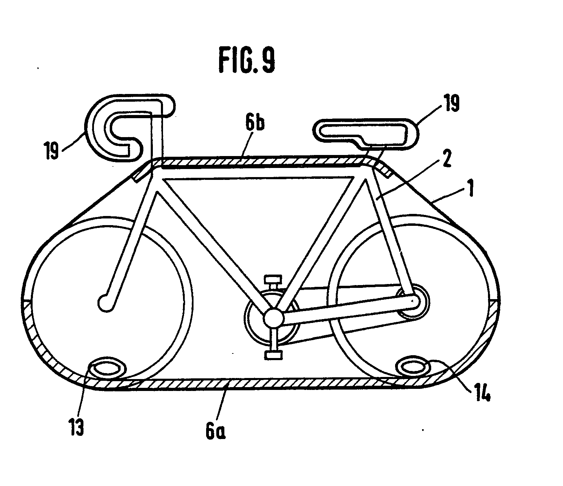

In Fig. 9 ist eine alternative Schutzhülle dargestellt, bei der Lenker und Sattel des Zweirades 2 aus der Hülle 1 herausragen. Lenker und Sattel können zusätzlich mit separaten Schutzhüllen umhüllt werden. Da in diesen Bereichen aber keine für die technische Funktion des Fahrrades wichtigen Elemente angeordnet sind, ist der Transport auch ohne weiteren Schutz dieser beiden Elemente möglich.

Die in Fig. 9 gezeigte Schutzhülle 1 hat, obwohl sie Sattel und Lenker ungeschützt läßt, den Vorteil, daß bei unverändert gutem Schutz der technisch wichtigen Elemente (Schaltung, Bremsen, Lager) die Schutzhülle einfacher aufgebaut und in ihrer Fläche erheblich reduziert ist. Die Schutzhülle weist zwei verschließbare Öffnungen 6a und 6b auf, wobei die Öffnung 6a das über das Zweirad Stülpen der Schutzhülle gestattet; die Öffnung 6b ermöglicht in sehr einfacher Weise das durch die Hülle nach außen Schieben von Lenker und Sattel.

Für die Handhabung hat es sich als besonders praktisch erwiesen, den Verschluß 6a als Reißverschluß und den Verschluß 6b als Klettbandverschluß auszuführen. In dieser Ausführungsform ist die obere Öffnung 6b auch bei unterschiedlichem Abstand zwischen Lenker und Sattel zu verschließen. Mit Hilfe zusätzlicher an der Hülle befestigter Bänder (nicht dargestellt) können Lenker und Sattelrohr zusätzlich umwickelt und somit hermetisch abgeschlossen werden.

In Abweichung zur Fig. 1 weist die in Fig. 9 dargestellte Schutzhülle im unteren Bereich der beiden Räder jeweils zwei deckungsgleich übereinander angeordnete Öffnungspaare 13 und 14 auf, durch die Halterungselemente des Dachgepäckträgers oder auch am Gepäckträger oder dergleichen befestigbare Diebstahlssicherungen fixierbar sind. Die Öffnungspaare 13, 14 sind mit Randverstärkungen, vorzugsweise Metallösen, versehen, die ein Einreißen der Hülle vermeiden. Im Prinzip können über die Öffnungen 13, 14 mit Klettband verschließbare Klappen vorgesehen sein. Die Praxis hat allerdings gezeigt, daß die durch diese Öffnungen eindringenden Wasser- und Schmutzmengen vernachlässigbar sind, so daß sich derartige Maßnahmen im Regelfall erübrigen.

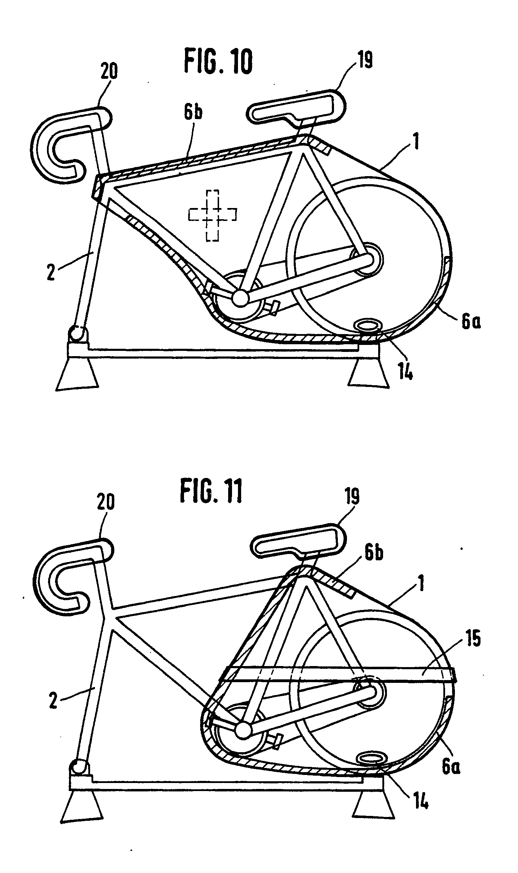

Fig. 10 und 11 zeigen zwei weitere Ausführungsformen mit reduzierter Oberfläche. Beide Schutzhüllen 1 umhüllen das Fahrrad 2 mehr oder weniger stark. In beiden Fällen sind jedoch dem Grundprinzip folgend die das Tretlager, die Schaltung und die Kette betreffenden Bereiche vollständig umhüllt und somit den Witterungseinflüssen entzogen.

Die in Fig. 10 dargestellte Schutzhülle schließt neben Tretlager, Schaltung und Kette auch den gesamten Rahmen des Zweirades mit ein. Der lösbare Verschluß 6a im unteren Bereich der Hülle ist vorzugsweise als Reißverschluß ausgeführt. Der obere Verschluß ist zumindest in den Bereichen, in denen Lenker und Sattelstange aus der Hülle herausragen, besonders gut zu handhaben, wenn Klettbandverschlußelemente vorgesehen sind. Alternativ dazu sind aber auch Reißverschlüsse mit mehreren Schiebern verwendbar, vorzugsweise vier Schiebern, d. h. für jeden Rohrauslaß zwei.

Die in Fig. 11 dargestellte Hülle ist in der Fläche auf ein Minimum reduziert. Bei ihr sind auch Teile des Fahrradrahmens außerhalb der Hülle belassen. Genau wie bei den verschiedenen vorhergehenden Hüllen sind im oberen und unteren Bereich getrennte Verschlüsse 6b, 6a vorgesehen, die als Reißverschlüsse oder Klettbandverschlüsse ausgeführt sein können.

Anstelle des in den Fig. 1 bis 6 und Fig. 10 erwähnten Klettbandkreuz 8, 9 ist hier ein Spanngurt vorgesehen, der vorzugsweise an der Hülle befestigt und mittels nicht dargestellter Spannelemente nach dem Verschließen der Verschlüsse 6a, 6b gespannt werden kann. Auf diese Weise wird die Schutzhülle am Fahrrad verzurrt, wodurch ein Aufblähen der Hülle ebenfalls vermieden wird. Selbstverständlich ist ein derartiger Spanngurt 15 auch bei den anderen Hüllen verwendbar. Die Klettbandkreuze 8, 9 sind jedoch, soweit im Rahmendreieck vorsehbar, einfacher und billiger in der Herstellung.

Abweichend von den vorhergehenden Darstellungen (Fig. 1 bis 8) sind in Fig. 10, 11 im Bereich der Dachständerbefestigung ebenfalls Öffnungspaare 14 vorgesehen, die mit Randverstärkungen, vorzugsweise als Metallösen, in der Hüllenfläche eingebracht sind. Der Hüllenverschluß 6a wird in diesem Fall also nicht mehr stramm an den Befestigungsmitteln des Dachständers vorbeigeführt, sondern umschließt das Fahrrad vollständig. Die Befestigungsmittel des Dachständers werden bei dieser Ausführungsform durch die zu beiden Seiten der Hülle vorgesehenen Ösen 14 hindurchgeführt.

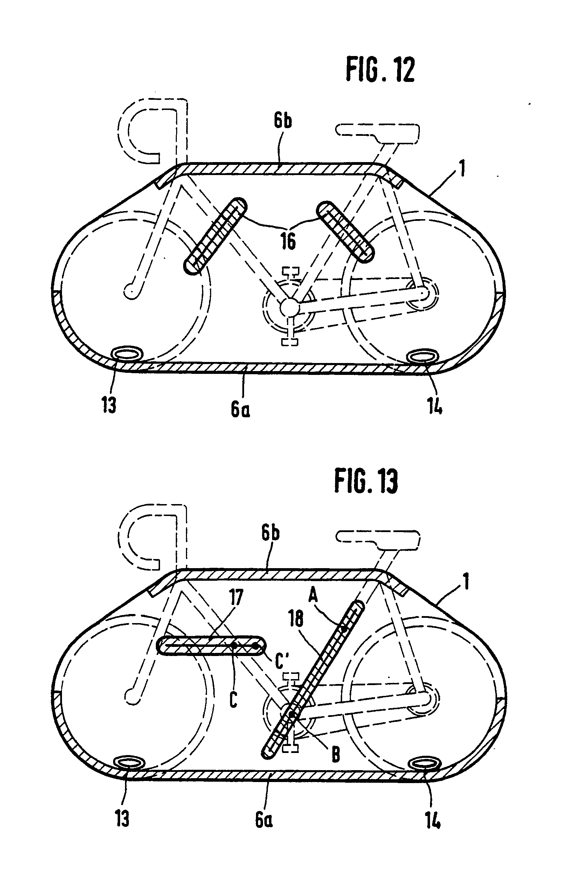

Fig. 12 zeigt die in Fig. 9 beschriebene Schutzhülle im Zusammenhang mit zwei Öffnungsschlitzen 16. Wie Fig. 12 zu entnehmen ist, sind die Öffnungsschlitze 16 so angeordnet, daß sie jeweils Sattelrohr und Unterrohr des Zweiradrahmens kreuzen. Im geöffneten Zustand gestatten die Öffnungsschlitze 16 einen direkten Zugriff zu den beiden Rohren des Rahmens. Trotz der Umhüllung ist das Zweirad somit sicher zu fassen und problemlos auf Dachständern oder Heckgepäckträgern zu plazieren.

Fig. 13 zeigt eine weitere Ausführungsform der erfindungsgemäßen Öffnungsschlitze. Abweichend von der in Fig. 12 gezeigten Anordnung sind die Öffnungsschlitze 17, 18 allerdings nicht zur Symmetrielinie der Schutzhülle spiegelsymmetrisch angeordnet. Der Öffnungsschlitz 17 verläuft vielmehr waagerecht bzw. weitgehend parallel zu den Ober- und Unterkanten der Schutzhülle. Der Öffnungsschlitz 18 verläuft leicht diagonal bzw. parallel zum Sattelrohr des Zweiradrahmens und erstreckt sich nahezu über die gesamte Breite der Schutzhülle.

Der Öffnungsschlitz 17 ist so angeordnet, daß er unabhängig von der Form des zu umhüllenden Zweirades stets das Unterrohr des Rahmens kreuzt. Der Kreuzungspunkt ist als Punkt C gekennzeichnet. Bei dieser Anordnung ist stets der manuelle Zugang zum Unterrohr möglich.

Der parallel zum Sattelrohr verlaufende Öffnungsschlitz 18 ermöglicht einerseits den Zugang zur gesamten Länge des Sattelrohres und bietet darüber hinaus die Möglichkeit, die Tretpedale beidseitig aus der Hülle herausragen zu lassen, wodurch sich eine besonders flache Umhüllung des Zweirades ermöglicht. Darüber hinaus sind durch die außen angeordneten Pedale punktuelle Belastungen im Bereich der äußeren Pedalenden vermieden.

Speziell für den Transport von Zweirädern auf Heckgepäckträgern, z. B. bei Wohnmobilen etc., haben sich im Markt Vorrichtungen durchgesetzt, die ein besonderes einfaches und sicheres Verstauen und Transportieren der Zweiräder ermöglichen.

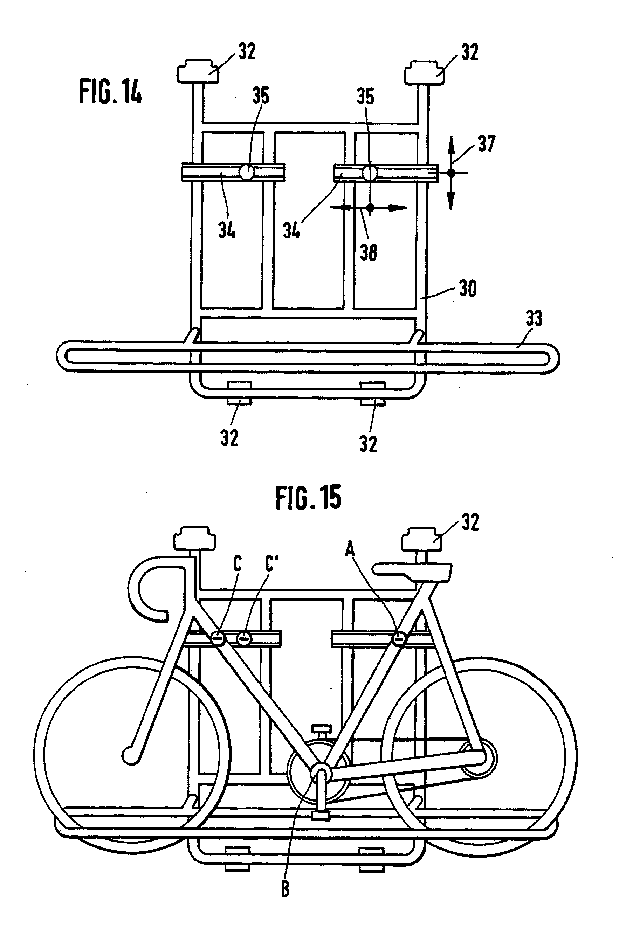

Ein im Markt sehr weit verbreiteter, als sogenanntes "Paulchen-System" (eingetragenes Warenzeichen) vertriebener Heckgepäckträger ist in den Fig. 14 und Fig. 15 schematisch dargestellt. Er besteht im wesentlichen aus dem Grundträger 30, der mit den vier Befestigungselementen 32 am Heck des jeweiligen Kraftfahrzeuges zu befestigen ist. Zum Transport von Zweirädern sind am Grundträger 30 pro zu transportierendes Zweirad je eine Teleskopschiene 33 vorgesehen, in die das Zweirad, wie aus Fig. 15 ersichtlich, hineinzustellen ist. Die Teleskopschienen 33 sind rechtwinklig zum Grundträger 30 angeordnet und in einem derartigen Abstand zum Grundträger montiert, daß das Zweirad ohne mit dem Lenker oder den Pedalen am Kraftfahrzeug anzustoßen darauf befestigt werden kann. Durch Längsverstellen der Teleskopschiene 33 ist eine Anpassung an den jeweiligen Raddurchmesser bzw. den jeweiligen Radabstand des zu transportierenden Zweirads möglich.

Die Teleskopschiene 33 fixiert das Zweirad somit im unteren Bereich der beiden Räder. Damit das Zweirad nicht umkippt und beim Transport nicht aus der Teleskopschiene herausspringt, ist mindestens eine weitere Fixierung notwendig. Diese ist mit den Abstandhalterungen 35 möglich. Die Abstandhalterungen 35 sind als Abstandsrohre ausgeführt, die in Montageschienen 44 seitenverstellbar (Pfeilrichtung 38) montiert sind. Am Ende der Abstandshalterungen sind Befestigungselemente vorgesehen, die mittels Schnellverschlüssen das Fixieren des Zweiradrahmens ermöglichen.

Da die Montageschienen 34 am Grundträger 30 entsprechend den Doppelpfeilen 37 auch in der Höhe verstellbar sind, ist eine individuelle Anpassung der Halterungen an die jeweils zu transportierenden Zweiräder möglich.

Pro Zweirad ist mindestens eine Abstandshalterung 35 notwendig. Sollen mehrere Zweiräder mit dem Grundträger 30 transportiert werden, sind dementsprechend viele Teleskopschienen 33 und Abstandshalterung 35 vorzusehen. Die Zweiräder werden in diesem Fall üblicherweise jeweils spiegelverkehrt voreinander gestapelt, wodurch sich eine enge "Verschachtelung" der Zweiräder ergibt. Derartige Gepäckträgersysteme sind bekannt. Bezüglich weiterer Details wird auf die Werbeunterlagen des sogenannten "Paulchen-Systems" verwiesen. Die in Fig. 13 dargestellte Schutzhülle gestattet nun,

wie anfangs bereits erwähnt, trotz Teil- oder vollständiger Umhüllung des Zweirades auch die Befestigung mit der Zweiradhalterung des Heckgepäckträgers (Fig. 14 und Fig. 15), da die Abstandshalter 35 in den Punkten A und/oder C durch die rückwärtigen Öffnungsschlitze 17, 18 der Hülle 1 in die Hülle eingeführt und am Rahmen des Zweirades befestigt werden können. Für die Montage weiterer Zweiräder sind beispielsweise im Punkt C' auch weitere Abstandshalter vorsehbar, die am Rahmen des ersten Zweirades vorbei durch beide Planen der ersten Schutzhülle hindurchragen.

Damit die Öffnungen 17, 18 trotz der in die Schutzhülle hinein- oder hindurchgeführten Halterungselemente verschließbar sind, werden vorzugsweise mehrläufige Reißverschlüsse verwendet. Im vorliegenden Fall empfehlen sich Reißverschlüsse mit vier Schieberelementen, die jeweils für sich das Öffnen und Schließen von Teilbereichen des Reißverschlusses gestatten.

Auf diese Weise kann der zum Öffnungsschlitz 10 gehörige Reißverschluß, der dem Grundträger 30 zugewandten rückwärtigen Plane mit zwei Reißverschlußschiebern im Punkt C (Abstandshalter des ersten Zweirads) geschlossen werden. Eine im Punkt C' für einen weiteren Abstandshalter vorzusehende Öffnung wird mit den anderen beiden Reißverschlußschiebern geschlossen.

Bei der vorderseitigen Plane ist lediglich im Punkt C' der für das zweite Zweirad vorgesehene Abstandshalter hindurchzuführen. Zum Schließen der dafür vorzusehenden Öffnung werden lediglich zwei der vier Schieber benötigt. Die anderen beiden Reißverschlußschieber sind in diesem Fall ohne Funktion. Wird die Schutzhülle seitenverdreht verwendet, z. B. für den Transport eines zweiten parallel anzuordnenden Zweirades, ändern sich auch die Funktionen der Reißverschlüsse entsprechend, d. h. von dem im vorliegenden Fall nur in Teilfunktionen genutzten Reißverschluß werden dann alle vier Schieber benötigt und umgekehrt.

Die Reißverschlüsse der Öffnungen 18 weisen ebenfalls vier Schieber auf und gestatten somit in gleicher Weise das Verschließen zweier Durchgriffsöffnungen. Im rückwärtigen Bereich der Plane schließen somit zwei Reißverschlußschieber die durch die Abstandshalterung im Punkt A gebildete Öffnung, zwei weitere Reißverschlußschieber ermöglichen das Freilegen des Pedals im Punkt B.

Bei der vorderseitigen Plane ist lediglich die Pedalöffnung im Punkt B zu schließen. Da die Halterung im Punkt A am Rahmen des Zweirades endet, haben die beiden weiteren beiden Reißverschlußschieber, entsprechend dem oben Gesagten, ebenfalls keine Funktion.

Wird auf dem Gepäckträger ein zweites Zweirad montiert, ist dieses, wie bereits erwähnt, spiegelbildlich verdreht anzuordnen. Die Schlitzöffnungen in Vorderseite und Rückseite der Plane sind entsprechend zu verwenden.

In der Praxis hat es sich als besonders vorteilhaft erwiesen, wenn die äußere Plane des jeweils äußeren Zweirades völlig geschlossen ist. In diesem Fall empfiehlt es sich also, zumindest das äußere Pedal in der Hülle anzuordnen und nach der Befestigung des Zweirades beide Schlitzöffnungen der äußeren Plane 17, 18 vollständig zu schließen.

Durch Verwendung von Reißverschlüssen mit beidseitig bedienbaren Reißverschlußschiebern (beidseitige Öffnungslaschen) bietet sich die Möglichkeit auch die Reißverschlüsse der dem Grundträger 30 zugewandten Schutzhüllenseite durch die Öffnungsschlitze der Vorderseite hindurch zu bedienen. Die Montage des Zweirades sowie das Öffnen und Schließen der Reißverschlüsse ist somit ohne mühsames Umgreifen der Hülle völlig problemlos.

Es ist einleuchtend, daß die jeweiligen Öffnungsschlitze 17, 18 aufgrund der Flexibilität der Schutzhülle ihre Funktion auch dann erfüllen, wenn sie nicht ganz exakt mit den Idealpositionen übereinstimmen. Aus diesem Grund ist es auch möglich, die erfindungsgemäßen Öffnungsschlitze 17, 18 in eine Art Mittelwertposition anzuordnen, mit der es möglich ist, die Erfindung in Standardschutzhüllen für verschiedene Zweiradtypen verwendbar zu machen. In gleicher Weise sind die erfindungsgemäßen Öffnungsschlitze bei Schutzhüllen verwendbar, deren äußere Form von den in den Figuren dargestellten abweichen.

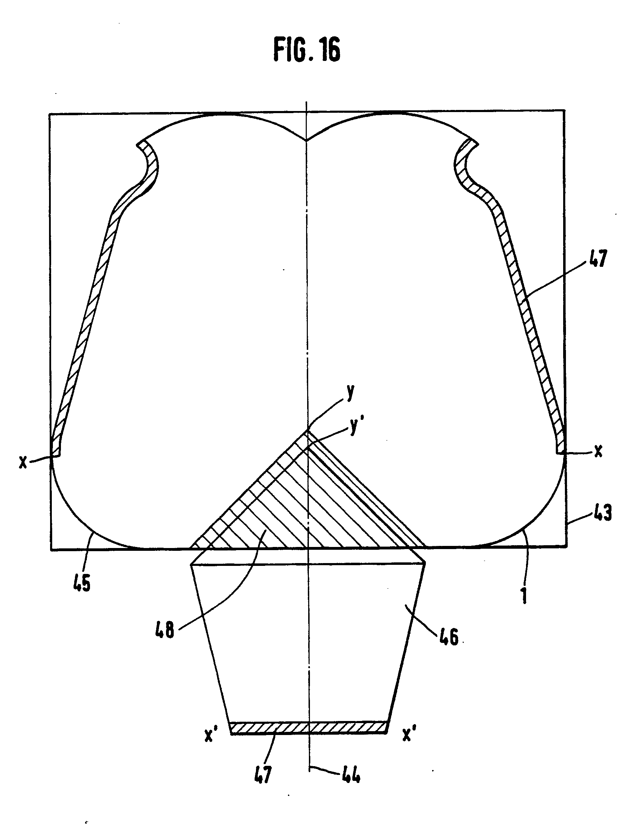

Die Herstellung der in Fig. 1 dargestellten erfindungsgemäßen Schutzhülle 1 ist relativ einfach. In Fig. 16 ist das Grundprinzip schematisch dargestellt. Entsprechend der Fig. 16 ist auf einer rechteckigen Plane 43 zu beiden Seiten der Symmetrielinie 44 der Umriß 45 der Fahrradhülle aufgezeichnet, im vorliegenden Fall der Umriß der in Fig. 3 dargestellten Schutzhülle. Der Umriß 45 berücksichtigt selbstverständlich in den Bereichen, in denen die symmetrischen Flächenbereiche miteinander vernäht werden, einen entsprechenden Zuschlag. Eine derartige Vorgehensweise ist dem Fachmann jedoch bekannt und muß an dieser Stelle nicht gesondert beschrieben werden. In den Bereichen 17 werden die jeweiligen Hälften des Klettbandes angeordnet. Im Bereich 48 der Schutzhülle wird ein zusätzlicher Folienkeil vorgesehen, mit dem die Verbreiterung der Hülle im Fahrradlenkerbereich berücksichtigt wird. Die entlang der Umrißlinie 45 ausgeschnittene Plane wird entlang der Linien $\overline{XY}$ mit dem Einsatzkeil 46 entlang der Linien X'Y' derart vernäht, daß die Punkte X und X' sowie Y und Y' jeweils übereinander angeordnet sind. Im unteren Bereich des Einsatzkeils 46 wird das Klettband 47 weitergeführt, so daß bei der vernähten Schutzhülle nun der gesamte untere Kantenbereich der Schutzhülle mittels des Klettbandes verschlossen werden kann.

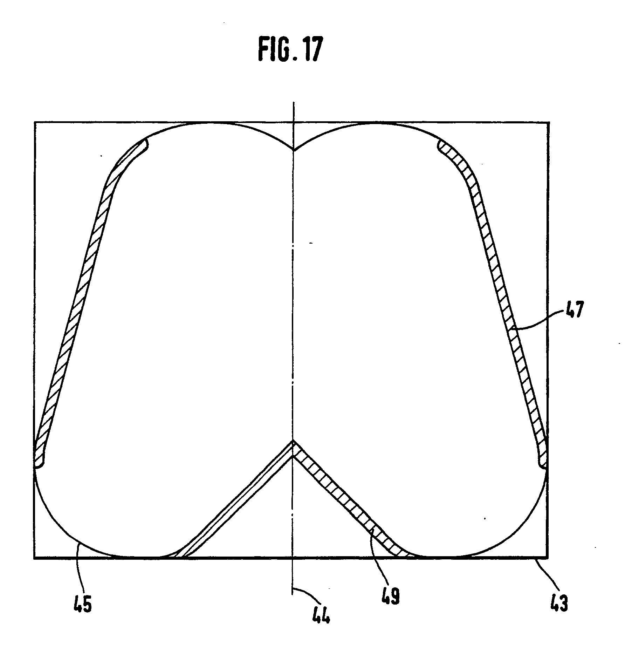

In Fig. 17 ist der schematische Aufriß der in Fig. 4 dargestellten Schutzhülle wiedergegeben. Bei der in Fig. 4 dargestellten Ausführungsform ist, wie bereits beschrieben, durch den außerhalb der Schutzhülle angeordneten Fahrradlenker kein Einsatzkeil 46 notwendig. Da bei dieser Variante im vernähten Zustand eine Öffnung vorzusehen ist, durch die der Fahrradlenker durch die Hülle hindurch nach außen geschoben werden kann, ist neben den Klettbandbereichen 47, die bei der fertigen Schutzhülle den unteren lösbaren Verschluß darstellen, auch in den Bereichen 49 ein Klettbandverschluß vorzusehen, durch den den Fahrradlenker durch die Hülle hindurch nach außen geschoben und anschließend die Hülle wasserdicht verschlossen werden kann.

Dem Fachmann ist geläufig, daß die Anpassung der Schutzabdeckungen an verschiedene Fahrradformen oder -größen beliebig möglich ist. Wichtig ist in diesem Zusammenhang, daß die Schutzhülle weitgehend der Grundform des Zweirades entspricht und daß sie im "montierten" Zustand allseits verschlossen ist. Durch die Verwendung der lösbaren Verschlüsse erhält man stets eine Schutzabdeckung, die das Zweirad mit wenigen Handgriffen wasserdicht verpacken läßt. Bei der Verwendung von Klettbändern als lösbaren Verschluß wird die Umhüllung auch im Bereich der Befestigungselemente des Dachträgers nicht wesentlich beeinflußt, da das Klettband um derartige Befestigungselemente beidseitig straff herumgeführt und eng anliegend verschlossen werden kann, wodurch sich auch in diesen Bereichen ein spritzwasserfester hermetischer Verschluß ergibt. Die vernähten Teile der Schutzhülle 1 weisen sogenannte U-Profil- oder Kappnähte auf. Erfahrungsgemäß sind derartige Nähte besonders strapazierfähig und selbst bei längerer Regeneinwirkung wasserdicht. Ein vorheriges Verkleben der Nähte ist zur weiteren Erhöhung der Dichtheit ebenso möglich.

Die in den Fig. 1 bis 11 beschriebenen Ausführungsformen decken eine breite Anwendungspalette ab. Die in den Fig. 1 und 2 gezeigte Version stellt dabei eher eine universelle Schutzhülle dar, die sowohl für Zweiräder unterschiedlicher Größe als auch für den Schutz abgestellter (ruhender) Zweiräder sehr gut geeignet ist. Die in den Fig. 7, 8 dargestellte Variante ist idealer Weise wie ein Maßanzug an die Form des Zweirades ganz exakt angepaßt. Die anderen Formen sind zwischen diesen beiden Extremen angesiedelt.

Entsprechend der in den Fig. 4 und 9 bis 11 dargestellten Ausführungsformen können Fahrradlenker und Sattel auch mit separaten Schutzhüllen 19, 20 abgedeckt sein. Die Lenkerhülle 20 ist im unteren Bereich mit einem Klettband verschlossen. Die Sattelhülle 21 ist sinnvollerweise mit einem Gummizug oder einer Spannschnur versehen, welche mit Knoten und Schleife oder aber mit einem üblichen Schnellverschlußelementen zu verschließen ist.

**Patentansprüche**

1. Schutzabdeckung für Zweiräder oder dergleichen, insbesondere für den Transport auf Kraftfahrzeugen, bestehend aus widerstandsfähiger Kunststoffolie, die haubenförmig über das Zweirad gestülpt wird, dadurch **gekennzeichnet,** daß die Schutzabdeckung zumindest Tretlager, Kettenschaltung und Kette umschließt, allseits spritzwasserfest verschlossen ist und auf mindestens einer Seite einen lösbaren Verschluß aufweist, der im geschlossenen Zustand ebenfalls spritzwasserundurchlässig ist.

2. Schutzabdeckung nach Anspruch 1, dadurch **gekennzeichnet,** daß der lösbare Verschluß ein Reißverschluß, vorzugsweise ein Klettbandverschluß ist.

3. Schutzabdeckung nach Anspruch 1, dadurch **gekennzeichnet,** daß die Grundform der Hülle aerodynamisch angepaßt, vorzugsweise im Querschnitt tropfenförmig ausgeführt ist.

4. Schutzabdeckung nach Anspruch 1 oder 2, dadurch **gekennzeichnet,** daß längs der Schutzhülle Flächenstabilisierungselemente vorgesehen sind, die das Flattern oder Aufblähen der Hülle verringern.

5. Schutzabdeckung nach Anspruch 4, dadurch **gekennzeichnet,** daß die Stabilisierungselemente Stabilisierungsleisten sind, die in längs der Hülle verlaufende Taschen eingeschoben sind.

6. Schutzabdeckung nach Anspruch 4, dadurch **gekennzeichnet,** daß als Flächenstabilisierungselement eine aufgenähte Tasche vorgesehen ist, in der das Vorderrad oder ein Reserverad des Zweirads verstaubar ist oder ein Spanngurt (15), der die Schutzhülle umschließt.

7. Schutzabdeckung nach Anspruch 4, dadurch

gekennzeichnet, daß die Flächenstabilisierungselemente durch in der Hülleninnenseite aufgenähte Klettbandstreifen gebildet sind, die im Flächenzentrum der Hülle ein Aneinanderfixieren der beidseitigen Hüllenflächen gestattet, so daß sich die Seitenflächen der Hülle gegenseitig stabilisieren.

8. Schutzabdeckung nach Anspruch 7, dadurch gekennzeichnet, daß die Klettbandstreifen auf den beiden Flächen der Hülle kreuzförmig angeordnet sind, so daß innerhalb eines größeren Toleranzbereiches beim Aneinanderdrücken der beiden Flächen stets ein Überkreuzen der Klettbandstreifen sichergestellt ist.

9. Schutzabdeckung nach Anspruch 1, dadurch gekennzeichnet, daß sie bei geschlossenem Verschluß das Zweirad vollständig umhüllt.

10. Schutzabdeckung nach Anspruch 1, dadurch gekennzeichnet, daß sie das Zweirad mit Ausnahme des Lenkers und/oder des Sattels vollständig umhüllt.

11. Schutzabdeckung nach Anspruch 10, dadurch gekennzeichnet, daß die Öffnungen, aus denen Lenker und Sattel aus der Schutzhülle herausragen, ebenfalls mit lösbaren Verschlüssen zu verschließen sind.

12. Schutzabdeckung nach einem der Ansprüche 1, 10 oder 11, dadurch gekennzeichnet, daß die aus der Hülle herausragenden Lenker und Sattel mit separaten verschließbaren Schutzhüllen (19, 20) umhüllt sind.

13. Schutzabdeckung nach Anspruch 1, dadurch gekennzeichnet, daß die Kunststoffolie eine gewebeverstärkte Kunststoffplane ist.

14. Schutzabdeckung nach Anspruch 1, dadurch gekennzeichnet, daß die Grundform der Hülle aus einer der Umrißform des Zweirades angepaßten, längs der Symmetrielinie zusammmengeklappten Plane besteht, die im Bereich des Hinterrades direkt vernäht und im Bereich des Vorderrades auf Breite des Lenkers mittels eines ebenfalls eingenähten keilförmigen Einsatzes ergänzt ist.

15. Schutzabdeckung nach einem oder mehreren der vorhergehenden Ansprüche, dadurch gekennzeichnet, daß die nicht lösbaren Nähte der Schutzabdeckung als sogenannte U-Profilnähte ausgeführt sind.

16. Schutzabdeckung nach einem oder mehreren der vorhergehenden Ansprüche, dadurch gekennzeichnet, daß die Umrißform weitgehend an die Umrißform des Zweirades angepaßt ist.

17. Schutzabdeckung nach Anspruch 16, dadurch gekennzeichnet, daß für die Vorderradgabel ein beidseitig zu öffnender schlauchförmiger Teil (21) der Schutzabdeckung (1) vorgesehen ist.

18. Schutzabdeckung nach Anspruch 16, dadurch gekennzeichnet, daß im inneren Bereich des Fahrradrahmens eine Aussparung (22) vorgesehen ist.

19. Schutzabdeckung nach einem oder mehreren der vorhergehenden Ansprüche, dadurch gekennzeichnet, daß im Bereich des Dachständers Spannelemente (23, 24) vorgesehen sind, mit denen die Schutzabdeckung am Auto-Dachständer zusätzlich fixiert und gespannt werden kann.

20. Schutzabdeckung nach Anspruch 19, dadurch gekennzeichnet, daß die Spannelements (23, 24) elastisch ausgeführt und die freien Enden vorzugsweise mit Klettbandelementen an der Schutzabdeckung verspannbar sind.

21. Schutzabdeckung nach Anspruch 18, dadurch gekennzeichnet, daß die Aussparung (22) allseits vorzugsweise mit Klettband verschließbar ist.

22. Schutzabdeckung nach einem oder mehreren der vorhergehenden Ansprüche, dadurch gekennzeichnet, daß im Bereich der Kettenschaltung, der Zahnräder und/oder der Reifen Verstärkungseinsätze (26, 27) vorgesehen sind, die gegen Verschmutzung und Beschädigung widerstandsfähiger sind.

23. Schutzabdeckung nach einem oder mehreren der vorhergehenden Ansprüche, dadurch gekennzeichnet, daß im Rahmenbereich der Schutzabdeckung Verstärkungselemente (25) vorgesehen sind, über die das Fahrrad mit Stützelementen des Dachständers fixierbar ist.

24. Schutzabdeckung nach Anspruch 22 und 23, dadurch gekennzeichnet, daß die Verstärkungselemente (25, 26, 27) aus Leder sind.

25. Schutzabdeckung nach Anspruch 1, dadurch gekennzeichnet, daß in der Fläche der Schutzabdeckung, zumindest auf einer Seite derselben, mindestens zwei weitere verschließbare Öffnungsschlitze (16, 17, 18) vorgesehen sind, die sich mit den Rahmenrohren des umhüllten Zweirades kreuzen oder in etwa parallel dazu verlaufen und die einen direkten Zugriff zum Rahmen des Zweirades ermöglichen.

26. Schutzabdeckung nach Anspruch 25, dadurch **gekennzeichnet,** daß die verschließbaren Öffnungsschlitze (16) jeweils in etwa quer zum Unterrohr und Sattelrohr des Zweiradrahmens verlaufen und die jeweiligen Kreuzungspunkte mit den Rahmenrohren in etwa mit den Mittelpunkten der Öffnungsschlitze zusammenfallen.

27. Schutzabdeckung nach Anspruch 25, dadurch **gekennzeichnet,** daß ein Öffnungsschlitz (17) in etwa waagerecht angeordnet ist und der andere Öffnungsschlitz (18) in etwa paralel zum Sattelrohr verläuft.

28. Schutzabdeckung nach Anspruch 27, dadurch **gekennzeichnet,** daß der parallel zum Sattelrohr verlaufende Öffnungsschlitz (18) die durch Abstandshalterung und Tretlager gebildeten Punkte (A, B) durchläuft.

29. Schutzabdeckung nach Anspruch 25, dadurch **gekennzeichnet,** daß die Öffnungsschlitze (16, 17, 18) auf beiden Seiten der Schutzabdeckung deckungsgleich übereinander zugeordnet sind.

30. Schutzabdeckung nach Anspruch 25, dadurch **gekennzeichnet,** daß die Öffnungsschlitze (16, 17, 18) mit Reißverschlüssen verschließbar sind.

31. Schutzabdeckung nach Anspruch 25, dadurch **gekennzeichnet,** daß die Öffnungsschlitze (16, 17, 18) mit Klettbandverschlüssen verschließbar sind.

32. Schutzabdeckung nach Anspruch 30, dadurch **gekennzeichnet,** daß die Reißverschlüsse mehrere Schieber, vorzugsweise jeweils vier Schieber, aufweisen.

33. Schutzabdeckung nach Anspruch 30 oder 32, dadurch **gekennzeichnet,** daß die Reißverschlußschieber mit beidseitigen Schieberlaschen ausgestattet sind.

34. Schutzabdeckung nach Anspruch 1, dadurch **gekennzeichnet,** daß im Bereich der Dachständerbefestigung in der Schutzhüllenfläche Öffnungspaare (13, 14) vorgesehen sind, die das Montieren von Befestigungselementen im geschlossenen Zustand der Schutzabdeckung (1) gestatten.

35. Schutzabdeckung nach Anspruch 34, dadurch **gekennzeichnet,** daß die Öffnungspaare (13, 14) als randverstärkte Metallösen ausgebildet sind.

## FIG.1

## FIG. 2

## FIG. 3

## FIG. 4

## FIG. 5

## FIG. 6

FIG. 7

FIG. 8

# FIG.9

FIG. 10

FIG. 11

## FIG. 12

## FIG. 13

FIG. 14

FIG. 15

18

# FIG. 16

# FIG.17

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y,A | US-A-3 968 913 (WEED ET AL.)<br>* Figuren 1-4 * * Spalte 1, Zeilen 1 - 7 @ Spalte 1, Zeile 54 - Spalte 2, Zeile 36 *<br>— — — | 1,2,9,16,<br>34,35,14 | B 60<br>R 9/10 |
| X,A | US-A-4 009 744 (JOSLYN)<br>* Figuren 1, 2 * * Spalte 1, Zeile 1 - Spalte 2, Zeile 53 *<br>— — — | 1,9,19,34,<br>14,20,35 | |
| X,A | US-A-4 378 883 (PROFETA)<br>* Figuren 1-7 * * Zusammenfassung * * Spalte 2, Zeile 53 - Spalte 4, Zeile 44 *<br>— — — | 1,3,9,13,<br>34,14,16,<br>35 | |
| X,A | US-A-4 715 646 (GOFFI ET AL.)<br>* Figuren 1-6 * * Spalte 1, Zeile 1 - Spalte 2, Zeile 46 *<br>— — — | 1,2,16,34,<br>3,35 | |
| Y,A | US-A-4 356 831 (ADAMS)<br>* Zusammenfassung; Figuren 1, 2 * * Spalte 2, Zeile 17 - Spalte 3, Zeile 14 *<br>— — — | 35,1,3,9,<br>13,16,34 | |
| A | FR-A-2 434 076 (JUBEAU FRANCE JEAN)<br>* Figur * * Seite 1, Zeilen 1 - 37 *<br>— — — — — | 1 | |

|  |
|---|
| **RECHERCHIERTE SACHGEBIETE (Int. Cl.5)** |
| B 60 R<br>B 62 J |

Der vorliegende Recherchenbericht wurde für alle Patentansprüche erstellt

| Recherchenort | Abschlußdatum der Recherche | Prüfer |
|---|---|---|
| Den Haag | 17 April 91 | D'SYLVA C.H.A. |